# EUROPEAN PATENT SPECIFICATION

(11) **EP 1 293 331 B1**
(45) Date of publication and mention of the grant of the patent: **05.04.2006**
(21) Application number: 01830583.9
(22) Date of filing: 13.09.2001
(51) Int. Cl.: B29C 69/02, B29C 51/08

(54) **A method for manufacturing a three-dimensional article and an intermediate product obtained thereby**
Verfahren zur Herstellung von einem driedimensionalen Gegenstand und ein Zwischenprodukt hergestellt durch dieses Verfahren
Procédé de fabrication d'un objet tridimensionnel et produit intermédiaire obtenue par ce procédé

(43) Date of publication of application: 19.03.2003
(73) Proprietor: SAN VALERIANO S.p.A., 10060 Virle Piemonte (Torino) (IT)
(72) Inventor: Bersia, Marino, 10048 Vinovo (Torino) (IT)
(74) Representative: Gerbino, Angelo

(56) References cited:
- US-A- 3 542 616
- US-A- 4 752 431
- US-A- 5 156 277
- US-A- 5 735 423
- PATENT ABSTRACTS OF JAPAN vol. 1998, no. 10, 31 August 1998 (1998-08-31) -& JP 10 114330 A (SHINWA CORP:KK), 6 May 1998 (1998-05-06)

## Description

The present invention relates to a method for manufacturing a three-dimensional article and an intermediate product obtained according to this method. In particular, the present invention relates to a method having the features indicated in the preamble of claim 1. A known method of this kind is disclosed in US-A-5 156 277.

Heat formed articles of a type commonly used in the automobile industry, such as structural or cladding panels, for example, and in particular wheel arch cover panels and the like, are the subject-matter of the invention.

The manufacture of three-dimensional articles by heat forming is well known in the art. However, such products are sometimes distinguished by shapes having deep cavities, making them very light compared to their size and thus uneconomical to transport from the site of their production to their assembly point.

The object of the present invention is to overcome this problem. To this end, a first object of the invention is to provide a method having the features indicated in claim 1 which follows.

The heat forming stage of the method of the invention is carried out using operations known per se, but produces an intermediate product which is of a different shape from, and in particular less bulky than, the desired finished article. It is advantageous if the intermediate product is unfolded into the configuration of the required finished product only once it is at its assembly point, thereby achieving the full benefit of its reduced size during transport.

The production of an intermediate article which is more compact than the finished product offers several advantages, such as:
- a reduction in the amount of raw material required to manufacture a given finished product,
- better distribution of the material in the intermediate product, and
- the possibility that the intermediate product may have no undercuts, even if these are present in the finished article.

The heat forming step is typically preceded by heating the sheet of heat-formable material. If necessary, it is possible to form the at least one fold line in the sheet before the heating operation, or during or after a pre-forming operation.

The method of the invention poses no substantial limit to the number or the shape of the fold lines formed in the intermediate article, the characteristics of which can be selected according to specific requirements of application. These lines may be open or closed, for example, so as to define an inner surface of the finished product and/or to cut the surface of this latter at one or more points. In the event of there being several fold lines, these can be arranged in series, giving the overall appearance of a single, discontinuous fold line.

The choice of the shape, depth and number of fold lines, as well as that of the intrinsic rigidity of the material constituting the sheet, enables the finished product to keep its required shape once the intermediate product has been unfolded. The fold lines divide the intermediate product into various portions which each have a certain degree of freedom, meaning that such product can be considered as a nodal system characterised by a plurality of hinge lines.

A further object of the invention is to provide an intermediate product achieved at the end of the heat forming operation described above and having the characteristics claimed in any of the appended claims 7 and 8.

Further characteristics and advantages of the invention will become apparent from the detailed description which follows, provided by way of non-limitative example, with reference to the appended drawings, in which:
Figure 1 is a perspective view of a three-dimensional article obtained at the end of the method of the invention, and
Figure 2 is a perspective view of an intermediate product of the method of the invention.

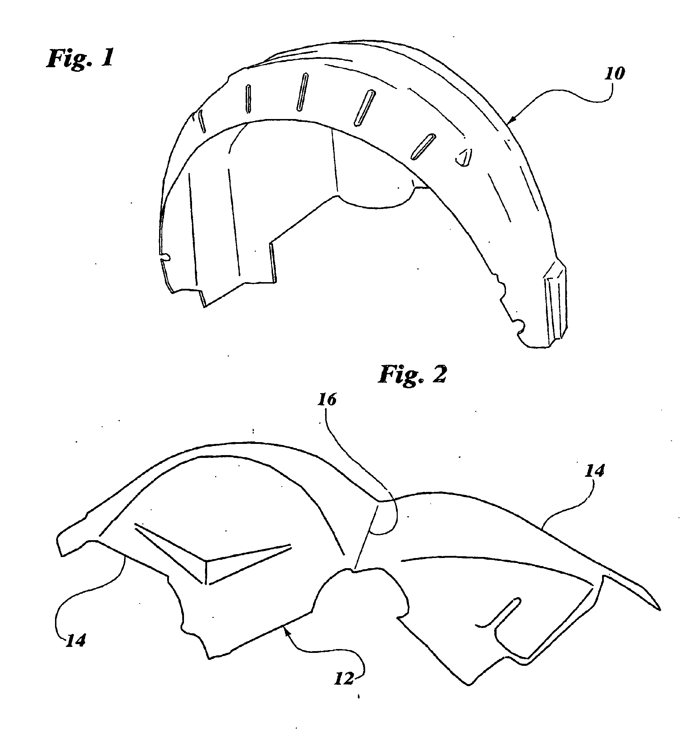

A method for the manufacture of a wheel arch cover panel 10 (see Figure 1) provides for an intermediate product 12, shown in Figure 2, to be manufactured by heat forming.

The heat forming methods used are known per se and involve a pre-heated flexible sheet of heat-formable material to be shaped in a mould which is of a complementary shape to that of the product which is being produced and has an upper die and a lower die.

This sheet is of a textile material, such as a non-woven material, for example, impregnated with resin, or one having a plastics film bonded to one or both surfaces. This bonding can be carried out either during a preliminary extrusion operation or during pre-forming operations. The sheet could also include other coating and/or protective layers.

The intermediate product 12 thus obtained (Figure 2) includes two portions 14 of arcuate shape joined by a fold line 16. The product 12 has a reduced height and thus takes up less space during transport from the place of production to the place of assembly, thereby reducing costs.

Once the intermediate product 12 has been transported to the place of assembly, the shaped portions 14 thereof are relatively rotated about the fold line 16 into a single-arch configuration, thus transforming the intermediate product 12 into a wheel arch cover panel 10 (see Figure 1) which is substantially the same shape and has substantially the same properties as a panel manufactured according to the prior art.

Naturally, the principle of the invention remaining unchanged, manufacturing details and embodiments may vary widely from those described here purely by way of non-limitative example, without departing thereby from the scope of the invention as defined in the claims.

## Claims

1. A method for manufacturing a three-dimensional article (10) which includes at least one layer of heat-formable material, which method includes the steps of:
- heat forming a sheet of heat-formable material so as to obtain an intermediate product (12) having at least one fold line (16), which occupies less space than the finished three-dimensional article (10), the said heat forming being carried out in a mould of a shape substantially complementary, to that of the intermediate product (12), and
- subsequently unfolding the intermediate product (12) along the said at least one fold line (16), thereby obtaining the finished three-dimensional article (10), said method being **characterised in that** the said heat-formable material is a textile material, impregnated with resin or bonded to a film of a plastics material and **in that** said article is a panel for use in the automobile industry.

2. A method according to Claim 1, **characterised in that** the said at least one fold line (16) is formed in the said sheet before the heat forming operation or during or after a preforming operation.

3. A method according to any of the above Claims, **characterised in that** the said at least one fold line (16) is Open.

4. A method according to any of Claims 1 to 2, **characterised in that** the said fold line is closed, so as to define an inner surface of the intermediate product.

5. A method according to any preceding Claim, **characterised in that** the said at least one fold line cuts the surface of the intermediate product at least at one point.

6. A method according to any preceding Claim, **characterised in that** the said intermediate product has a plurality of fold lines.

7. An intermediate product (12) having at least one fold line (16) and taking up less space than the finished three-dimensional article (10), obtainable at the end of the heat forming step of a method according to any of the preceding Claims.

8. An intermediate product (12) according to Claim 7, which can be unfolded into a wheel arch cover panel.

## Revendications

1. Procédé de fabrication d'un article tridimensionnel (10) qui comprend au moins une couche de matériau thermoformable, lequel procédé comprend les étapes consistant à :
- thermoformer une feuille de matériau thermoformable de manière à obtenir un produit intermédiaire (12) présentant au moins une ligne de pliage (16), qui occupe moins d'espace que l'article tridimensionnel terminé (10), ledit thermoformage étant réalisé dans un moule d'une forme substantiellement complémentaire à celle du produit intermédiaire (12), et
- déplier par la suite le produit intermédiaire (12) le long de ladite au moins une ligne de pliage (16), obtenant ainsi l'article tridimensionnel terminé (10),
ledit procédé étant **caractérisé en ce que** ledit matériau thermoformable est un matériau textile, imprégné de résine ou collé à un film de matériau plastique et **en ce que** ledit article est un panneau utilisé dans l'industrie automobile.

2. Procédé selon la revendication 1, **caractérisé en ce que** ladite au moins une ligne de pliage (16) est formée dans ladite feuille avant l'opération de thermoformage ou pendant ou après une opération de préformage.

3. Procédé selon l'une quelconque des revendications précédentes, **caractérisé en ce que** ladite au moins une ligne de pliage (16) est ouverte.

4. Procédé selon l'une quelconque des revendications 1 à 2, **caractérisé en ce que** ladite ligne de pliage est fermée de manière à ce qu'elle définisse une surface interne du produit intermédiaire.

5. Procédé selon l'une quelconque des revendications précédentes, **caractérisé en ce que** ladite au moins une ligne de pliage coupe la surface du produit intermédiaire au moins en un point.

6. Procédé selon l'une quelconque des revendications précédentes, **caractérisé en ce que** ledit produit intermédiaire présente une pluralité de lignes de pliage.

7. Produit intermédiaire (12) présentant au moins une ligne de pliage (16) et prenant moins d'espace que le produit tridimensionnel fini (10) pouvant être obtenu à la fin de l'étape de thermoformage d'un procédé selon l'une quelconque des revendications précédentes.

8. Produit intermédiaire (12) selon la revendication 7 qui peut être déplié en un panneau arqué de couverture de roue.

## Patentansprüche

1. Verfahren für die Herstellung eines dreidimensionalen Gegenstands (10), der zumindest eine Schicht aus einem warmformbaren Material aufweist, wobei das Verfahren folgende Schritte aufweist:
- Warmformen einer Folie aus einem warmformbaren Material, um ein Zwischenprodukt (12) zu erhalten, das zumindest eine Falzlinie (16) besitzt, wobei das Zwischenprodukt weniger Raum als der fertige dreidimensionale Gegenstand (10) einnimmt, wobei die Warmformung in einer Form ausgeführt wird, die im Wesentlichen komplementär zur Form des Zwischenprodukts (12) ist, und
- daraufhin Entfalten des Zwischenprodukts (12) entlang der zumindest einen Falzlinie (16), wodurch man den fertigen dreidimensionalen Gegenstand (10) erhält,
wobei das Verfahren **dadurch gekennzeichnet ist, dass** das warmformbare Material ein textiles Material ist, das mit einem Harz imprägniert oder auf einen Film aus Kunststoff geklebt ist, und dass der Gegenstand eine Platte ist, die in der Kraftfahrzeugindustrie verwendet wird.

2. Verfahren gemäß Anspruch 1, **dadurch gekennzeichnet, dass** die zumindest eine Falzlinie (16) in der Folie vor dem Vorgang der Warmformung ausgebildet wird, oder während bzw. nach einem Vorverformungsschritt.

3. Verfahren gemäß irgendeinem der bisherigen Ansprüche, **dadurch gekennzeichnet, dass** die zumindest eine Falzlinie (16) offen ist.

4. Verfahren gemäß irgendeinem der Ansprüche 1 bis 2, **dadurch gekennzeichnet, dass** die Falzlinie geschlossen ist, um eine innere Fläche des Zwischenprodukts festzulegen.

5. Verfahren gemäß irgendeinem der bisherigen Ansprüche, **dadurch gekennzeichnet, dass** die zumindest eine Falzlinie die Fläche des Zwischenprodukts in zumindest einem Punkt schneidet.

6. Verfahren gemäß irgendeinem der bisherigen Ansprüche, **dadurch gekennzeichnet, dass** das Zwischenprodukt eine Vielzahl von Falzlinien besitzt.

7. Zwischenprodukt (12), das zumindest eine Falzlinie (16) besitzt und weniger Platz einnimmt als der fertige dreidimensionale Gegenstand (10) und das man am Ende des Schritts für das Warmformen eines Verfahrens gemäß irgendeinem der bisherigen Ansprüche erhalten kann.

8. Zwischenprodukt (12) gemäß Anspruch 7, das zu einer Radkasten-Abdeckplatte gefaltet werden kann.
